# EUROPEAN PATENT APPLICATION

(11) **EP 4 130 690 A1**
(43) Date of publication of application: **08.02.2023**
(21) Application number: 21774445.7
(22) Date of filing: 25.03.2021
(51) Int. Cl.: G01G 9/00, G01G 17/08, G01B 11/24, A01K 29/00

(54) **IMAGING DEVICE, IMAGING METHOD, AND PROGRAM**

(30) Priority: 26.03.2020 JP 2020055979
(71) Applicant: NTT Technocross Corporation, Tokyo 108-8202 (JP)
(72) Inventor: AOYAGI, Shinichi, Tokyo 108-8202 (JP); IMAI, Kohei, Tokyo 108-8202 (JP); HATANAKA, Masanori, Tokyo 108-8202 (JP)
(74) Representative: Richardt Patentanwälte PartG mbB
(86) International application number: PCT/JP2021/012516
(87) International publication number: WO 2021/193816

(57) **Abstract**

An image capturing device according to an embodiment is an image capturing device for generating 3D point cloud data to be used in weight estimation of an image-capture object. The image capturing device includes a determination unit configured to dynamically determine whether a relative positional relationship between the image-capture object and the image capturing device satisfies a predetermined condition, and a control unit configured to capture an image of the image-capture object or to perform a notification prompting a user to capture the image of the image-capture object when the relative positional relationship satisfies the predetermined condition.

## Description

### TECHNICAL FIELD

The present invention relates to image capturing devices, image capturing methods, and programs.

### BACKGROUND ART

Conventionally, in a livestock farm, measures are taken to grasp the weight of each farm animal. Such measures are taken because, for example, when a farm animal such as a pig exceeds a certain weight, the value of the farm animal as meat can decrease.

The number of livestock raised in a livestock farm may exceed over several hundred animals (or several hundred birds). Hence, using a scale to grasp the weight of each farm animal can be laborious. In contrast, a technique using a three-dimensional measuring device formed by an infrared camera or the like is known (for example, see Patent Document 1). In this technique, the weight of a farm animal is estimated based on three-dimensional (3D) point cloud data acquired from capturing an image of the farm animal by the three-dimensional measuring device.

### RELATED-ART DOCUMENTS

### PATENT DOCUMENTS

Patent Document 1: Japanese Patent Application Laid-Open No. 2019-211364.

### SUMMARY OF THE INVENTION

### PROBLEM TO BE SOLVED BY THE INVENTION

However, even in a case where images of the same farm animal are captured, the 3D point cloud data acquired from the image capture may vary depending on the photographer due to various reasons (for example, due to the camera tilting because of the movement of the farm animal or the way the camera is held by the photographer). Hence, the weight estimation result of the farm animal may vary, and an accurate weight may not be obtained.

In consideration of the above problem, an object of one embodiment of the present invention is to restrict variation in 3D point cloud data for weight estimation.

### MEANS TO SOLVE THE PROBLEM

To achieve the above object, an image capturing device according to one embodiment is an image capturing device for generating 3D point cloud data to be used in weight estimation of an image-capture object. The image capturing device includes a determination unit configured to dynamically determine whether a relative positional relationship between the image-capture object and the image capturing device satisfies a predetermined condition, and a control unit configured to capture an image of the image-capture object or to perform a notification prompting a user to capture the image of the image-capture object when the relative positional relationship satisfies the predetermined condition.

### EFFECTS OF THE INVENTION

Variation in three-dimensional point cloud data for weight estimation can be restricted.

### BRIEF DESCRIPTION OF THE DRAWINGS

FIG. 1 is a view illustrating an example of the overall configuration of a weight estimation system according to the first embodiment;
FIG. 2 is a view illustrating an example of an image capture screen;
FIG. 3 is a view illustrating an example of a notification of image capture timing;
FIG. 4 is a block diagram illustrating the functional configuration of an image capturing device according to the first embodiment;
FIG. 5 is a flowchart illustrating an example of processing for the notification of image capture timing;
FIG. 6 is a view (Part 1) for explaining an example of the determination of a condition for the image capture timing;
FIG. 7 is a view (Part 2) for explaining an example of the determination of the condition for the image capture timing;
FIG. 8 is a view (Part 3) for explaining an example of the determination of the condition for the image capture timing;
FIG. 9 is a view (First Modification) for explaining an example of the determination of the condition for the image capture timing;
FIG. 10 is a view (Second Modification) for explaining an example of the determination of the condition for the image capture timing;
FIG. 11 is a block diagram illustrating an example of the functional configuration of an image capturing device according to the second embodiment;
FIG. 12 is a flowchart illustrating an example of processing for automatic image capture;
FIG. 13 is a view (Part 1) for explaining an example of the determination of conditions for automatic image capture;
FIG. 14 is a view (Part 2) for explaining an example of the determination of the conditions for automatic image capture;
FIG. 15 is a view (Part 3) for explaining an example of the determination of the conditions for automatic image capture; and
FIG. 16 is a view for explaining an example of obstacle display and contour detection display.

### MODE FOR CARRYING OUT THE INVENTION

An embodiment of the present invention will be described hereinafter. A weight estimation system 1 that is able to restrict variation among sets of 3D point cloud data that are acquired as results of image capture performed by different photographers, when 3D point cloud data are to be generated (acquired) for estimating the weight of a pig, as an example of a farm animal, will be described hereinafter. "Restriction of variation among sets of 3D point cloud data acquired by different photographers" here refers to a state in which the variation among the plurality of sets of 3D point cloud data, which are acquired when a plurality of different photographers capture images of the same pig, falls within a predetermined margin of error. In addition, as will be described below, let {(x, y, z)} be a set of 3D point cloud data. Variation among a plurality of sets of 3D point cloud data refers to an average, a sum, or the like of σ_{xy} with respect to (x, y), where σ_{xy} is the variation (for example, a distribution) of the value of z at the same (x, y) among the sets of 3D point cloud data.

### [First Embodiment]

The first embodiment will be described first.

### <Overall Configuration>

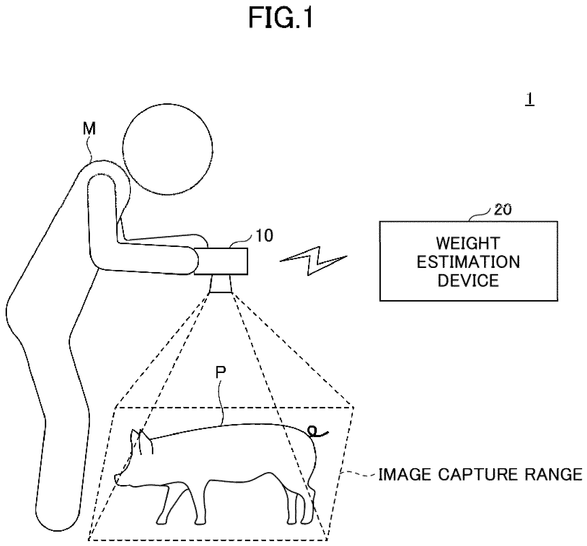

The overall configuration of the weight estimation system 1 according to the embodiment will be described first with reference to FIG. 1. FIG. 1 is a view illustrating an example of the overall configuration of the weight estimation system 1 according to the first embodiment.

As illustrated in FIG. 1, the weight estimation system 1 according to the embodiment includes an image capturing device 10 for capturing an image of a pig P, which is a target of weight estimation, to generate 3D point cloud data and a weight estimation device 20 for estimating the weight of the pig P based on the 3D point cloud data. The image capturing device 10 and the weight estimation device 20 are communicably connected to each other by a wireless connection, a wired connection, or both wired and wireless connections.

The image capturing device 10 is a digital camera, a smartphone, a tablet terminal, or the like used by a photographer M who is to capture an image of the pig P. The image capturing device 10 is equipped with a depth sensor. The image capturing device 10 measures the distance to each position within an image capture range, and generates 3D point cloud data representing each of these positions and their respective distances. The 3D point cloud data are expressed as a set {(x, y, z)} of (x, y, z), where (x, y) is each position within the image capture range and z is a value of the depth at each position. Note that the 3D point cloud data generated by the image capturing device 10 are transmitted to the weight estimation device 20.

In this embodiment, assume that the photographer M uses the image capturing device 10 to capture an image of the pig P from above the pig P. When the image is to be captured, the image capturing device 10 uses the relative positional relationship between the image capturing device 10 and the pig P to dynamically determine whether optimal image capture timing has arrived (that is, determine whether a positional relationship that enables acquisition of 3D point cloud data with little variation from those acquired by different photographers has been achieved). When the optimal image capture timing has arrived, the image capturing device 10 notifies the photographer M of this timing. Hence, since the image of the pig P can be captured at this image capture timing, the photographer M can acquire a set of 3D point cloud data that has little variation from those acquired by different photographers.

The weight estimation device 20 is a computer or a computer system that can estimate the weight of the pig P from the 3D point cloud data generated by the image capturing device 10. Note that the weight estimation method used by the weight estimation device 20 is not limited, and the weight of the pig P may be estimated from the 3D point cloud data by any known method. As an example, the weight estimation device 20 can estimate the weight of the pig P from the 3D point cloud data by using a method disclosed in Patent Document 1 described above.

Note that the overall configuration of the weight estimation system 1 illustrated in FIG. 1 is merely an example, and other configurations may be employed. For example, the weight estimation system 1 may not include the weight estimation device 20, but the image capturing device 10 may have a function for estimating the weight of the pig P from the 3D point cloud data. Furthermore, a cloud service or the like may provide a part or the entirety of the function for estimating the weight of the pig P from the 3D point cloud data.

### <Image Capture Screen and Notification of Image Capture Timing>

An image capture screen that is displayed on a display of the image capturing device 10 when the photographer M is to capture an image of the pig P, and a notification performed at the arrival of the optimal image capture timing will be described here.

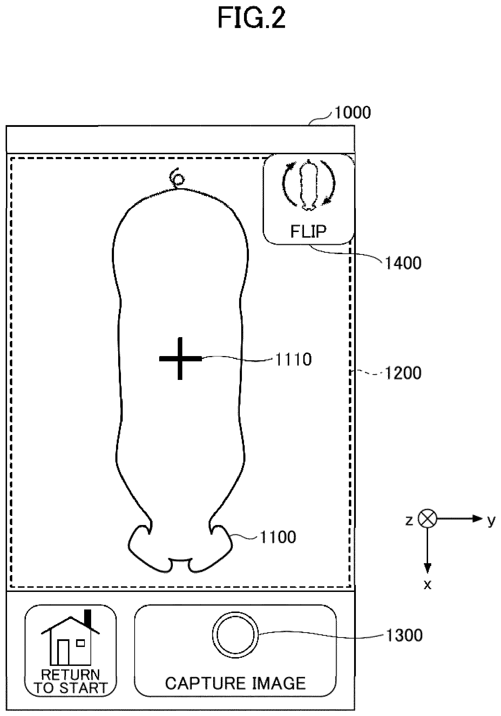

For example, when the photographer M operates the image capturing device 10 to start capturing an image, an image capture screen 1000 as illustrated in FIG. 2 is displayed on the display of the image capturing device 10.

The image capture screen 1000 illustrated in FIG. 2 includes an image capture guide 1100 for aligning the image capture position of the pig P. The image capture guide 1100 is shaped to depict the contour of the pig when the pig is viewed from above. The bottom direction and the top direction of the image capture screen 1000 correspond to a head direction and a tail direction, respectively.

The image capture screen 1000 also includes a center guide 1110 that indicates the center of an image capture range 1200. In this embodiment, assume that the origin (that is, a position where (x, y, z) = (0, 0, 0)) of the 3D point cloud data is the camera position of the image capturing device 10. Hence, the position indicated by the center guide 1110 is the origin (that is, (x, y) = (0, 0)) on any xy-plane of the 3D point cloud data. Assume also that the image capture direction is the +z-axis direction, the bottom direction of the image capture screen 1000 is the +x-axis direction, and the rightward direction of the image capture screen 1000 is the +y-axis direction. Note that the X-axis is also the center line bisecting (equally dividing) the shape depicted by the image capture guide 1100 into left and right halves.

The photographer M can capture an image of the pig P by moving the image capturing device 10 above the pig P, adjusting the image capturing device 10 so that the image capture guide 1100 matches the contour of the pig P, and pressing an image capture button 1300. As a result, a set of 3D point cloud data {(x, y, z)} representing the depth z of each position (x, y) in the image capture range 1200 is generated.

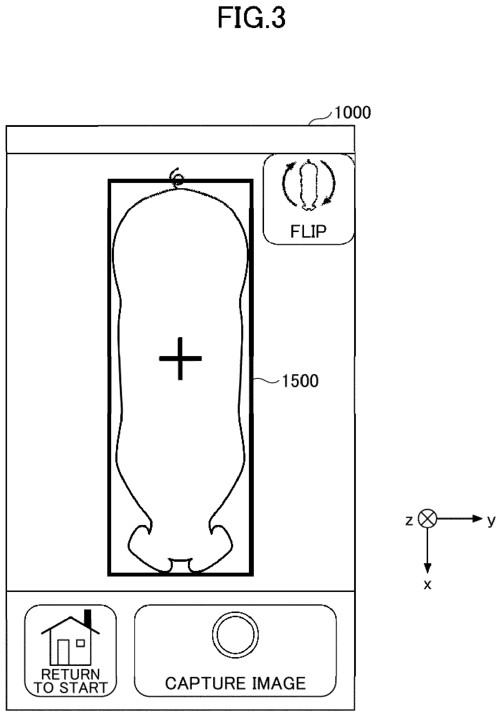

Even in a case where an image of the same pig P is to be captured as described above, the 3D point cloud data acquired from the image capture may vary depending on the photographer due to various reasons (for example, due to the image capturing device 10 tilting because of the movement of the pig P or the way the image capturing device 10 is held by the photographer M). Hence, while the image capture screen 1000 is displayed on the display, the image capturing device 10 according to the embodiment dynamically determines (that is, repeatedly determines every predetermined period) whether the relative positional relationship between the image capturing device 10 and the pig P satisfies a predetermined condition (this condition will be referred to as a "condition for the image capture timing" hereinafter). When it is determined that the condition for the image capture timing has been satisfied, the image capturing device 10 displays an image capture timing frame 1500, as illustrated in FIG. 3, on the image capture screen 1000. Displaying the image capture timing frame 1500 on the image capture screen 1000 in this manner can inform the photographer M that the optimal image capture timing has arrived (that is, that the relative positional relationship between the image capturing device 10 and the pig has become a positional relationship in which the 3D point cloud data has little variation from those acquired by different photographers). Note that the image capture timing frame 1500 stops being displayed after a predetermined period as elapsed (for example, after 1 or 2 seconds) or when it is determined that the condition for the image capture timing is not satisfied.

As a result, by pressing the image capture button 1300 at the time when the image capture timing frame 1500 is displayed, the photographer M can acquire a set of 3D point cloud data that has little variation from those acquired by different photographers. Note that although the photographer M is notified of the arrival of the image capture timing based on the display of the image capture timing frame 1500 on the image capture screen 1000 in the example illustrated in FIG. 3, this is merely an example, and the notification method is not limited to this. For example, the image capturing device 10 may output a predetermined sound, the image capturing device 10 may vibrate, or the image capture screen 1000 may flash to notify the photographer M of the arrival of the image capture timing.

Note that pressing a flip button 1400 allows the photographer M to vertically flip the image capture guide 1100. That is, the image capture guide 1100 can be flipped such that the top direction of the image capture screen 1000 corresponds to the tail direction and the bottom direction of the image capture screen 1000 corresponds to the head direction. This allows the top and the bottom of the shape depicted by the image capture guide 1100 (that is, the shape depicting the contour of the pig when the pig is viewed from above) to be changed in accordance with the actual direction of the pig P.

### <Functional Configuration>

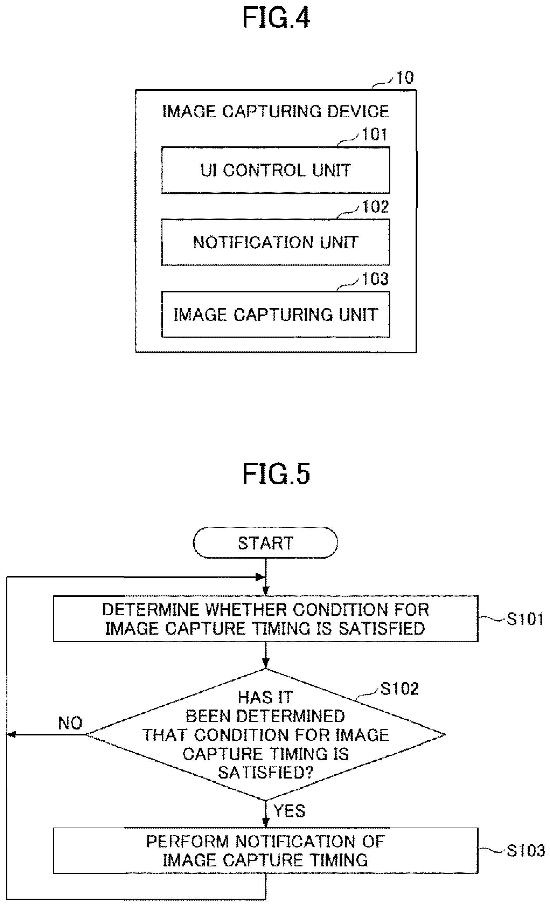

The functional configuration of the image capturing device 10 according to the embodiment will be described next with reference to FIG. 4. FIG. 4 is a view illustrating an example of the functional configuration of the image capturing device 10 according to the first embodiment.

As illustrated in FIG. 4, the image capturing device 10 according to the embodiment includes a UI control unit 101, a notification unit 102, and an image capturing unit 103. Each of these units is implemented by causing a processor such as a central processing unit (CPU) to execute one or more programs installed in the image capturing device 10.

The UI control unit 101 displays the image capture screen 1000 on the display of the image capturing device 10. While the image capture screen 1000 is displayed, the notification unit 102 determines, at each predetermined period (for example, at each period of depth measurement), whether the relative positional relationship between the image capturing device 10 and the pig P satisfies the condition for the image capture timing. The notification unit 102 notifies the photographer M that the image capture timing has arrived when it is determined that the condition for image capture timing has been satisfied. When the image capture button 1300 is pressed, the image capturing unit 103 generates the set of 3D point cloud data {(x, y, z)} expressing the depth z at each position (x, y) within the image capture range 1200. Note that the set of 3D point cloud data generated by the image capturing unit 103 is transmitted to the weight estimation device 20.

### <Processing for Notification of Image Capture Timing>

Processing for dynamically determining whether the relative positional relationship between the image capturing device 10 and the pig P satisfies the condition for the image capture timing, and notifying the photographer M of the image capture timing in accordance with the determination result will be described with reference to FIG. 5 hereinafter, based on the assumption that the image capture screen 1000 has been displayed on the display of the image capturing device 10 by the UI control unit 101. FIG. 5 is a flowchart illustrating an example of the processing for the notification of the image capture timing.

The notification unit 102 determines whether the relative positional relationship between the image capturing device 10 and the pig P satisfies the condition for the image capture timing (step S101). Note that the details of this determination will be described later.

When it is determined that the relative positional relationship between the image capturing device 10 and the pig P satisfies the condition for the image capture timing (YES in step S102), the notification unit 102 notifies the photographer M of the arrival of the image capture timing (step S103). That is, the notification unit 102 displays, for example, the image capture timing frame 1500 on the image capture screen 1000. However, the embodiment is not limited to this. For example, when it is determined that the relative positional relationship between the image capturing device 10 and the pig P satisfies the condition for the image capture timing, the image capturing unit 103 may automatically capture an image (that is, the 3D point cloud data {(x, y, z)} representing the depth z of each position (x, y) within the image capture range 1200 may be generated automatically).

Conversely, when it is determined that the relative positional relationship between the image capturing device 10 and the pig P does not satisfy the condition for the image capture timing (NO in step S102), the notification unit 102 returns to the process of step S101 described above.

### <<Determination of Condition for Image Capture Timing>>

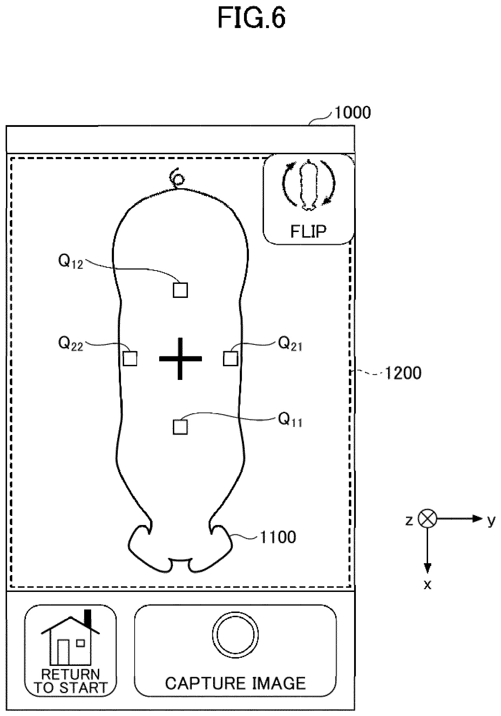

The details of the determination performed in step S101 described above will be described. In the embodiment, as illustrated in FIG. 6, whether the relative positional relationship between the image capturing device 10 and the pig P satisfies the condition for the image capture timing is determined by using the depth values of four points Q₁₁, Q₁₂, Q₂₁, and Q₂₂ set within the image capture range 1200 of the image capture screen 1000.

Q₁₁ is a point on the x-axis and is set in the vicinity of the boundary between the shoulder and the back of the pig in the shape depicted by the image capture guide 1100. Q₁₂ is a point on the x-axis and is set in the vicinity of the boundary between the back and the rump of the pig in the shape depicted by the image capture guide 1100. Q₂₁ is a point on the positive range of the y-axis and is set on the back of the pig in the shape depicted by the image capture guide 1100. Q₂₂ is a point on the negative range of the y-axis and is set on the back of the pig in the shape depicted by the image capture guide 1100. These four points are set in this manner because the distance to the vicinity of the boundary between the shoulder and the back of the pig, the distance to the vicinity of the boundary between the back and the rump of the pig, and the distances to the back of pig are less affected by the change in the posture of the pig (for example, when the pig is bending forward), that is, these four points are robust against the change in the posture of the pig. It is preferable for Q₂₁ and Q₂₂ to be set at positions that are symmetrical with respect to the x-axis.

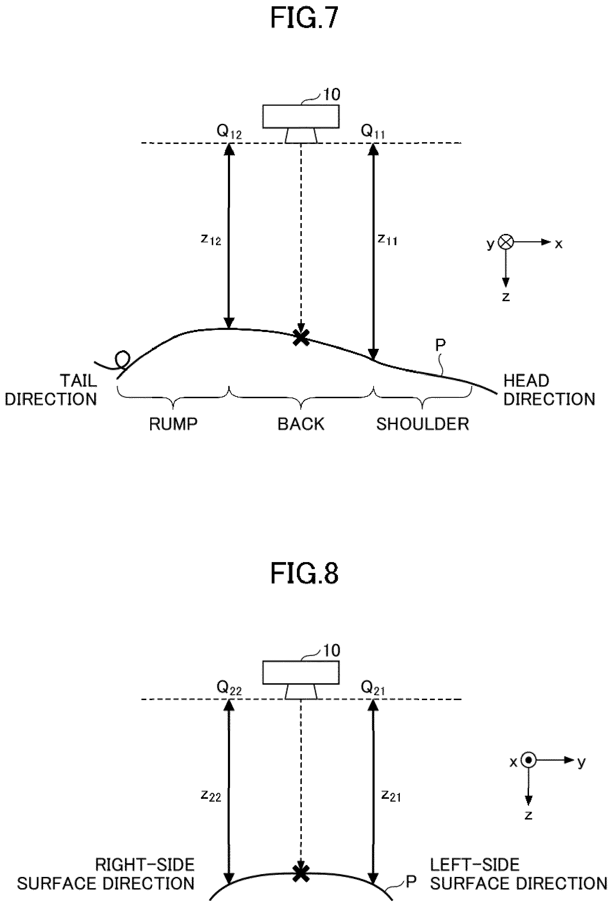

As illustrated in FIG. 7, a depth z₁₁ at Q₁₁ represents the distance from the image capturing device 10 to the vicinity of the boundary between the shoulder and the back of the pig P. In a similar manner, a depth z₁₂ at Q₁₂ represents a distance from the image capturing device 10 to the vicinity of the boundary between the back and the rump of the pig P. In addition, as illustrated in FIG. 8, a depth z₂₁ represents a distance from the image capturing device 10 to the position on the left side of the back of the pig P. In a similar manner, a depth z₂₂ at Q₂₂ represents a distance from the image capturing device 10 to the position on the right side of the back of the pig P.

At this time, let th₁ to th₄ be preset thresholds. When th₁ ≤ z₁₂ / z₁₁ ≤ th₂ and th₃ ≤ z₂₂ / z₂₁ ≤ th₄ are satisfied, it is determined that the relative positional relationship between the image capturing device 10 and the pig P satisfies the condition for the image capture timing. Conversely, when at least one of th₁ ≤ z₁₂ / z₁₁ ≤ th₂ and th₃ ≤ z₂₂ / z₂₁ ≤ th₄ is not satisfied, it is determined that the relative positional relationship between the image capturing device 10 and the pig P does not satisfy the condition for the image capture timing. Here, th₁ to th₄ can be set to appropriate values. For example, th₁ can be set to approximately 0.80 to 0.90, th₂ can be set to approximately 1.00 to 1.10, th₃ can be set to approximately 0.85 to 0.95, and th₄ can be set to approximately 1.05 to 1.15.

Note that although the four points Q₁₁, Q₁₂, Q₂₁, and Q₂₂ are set within the image capture range 1200 in this embodiment, Q₂₁ and Q₂₂ may not always be set. In such a case, whether the relative positional relationship between the image capturing device 10 and the pig P satisfies the condition for the image capture timing may be determined based on whether th₁ ≤ z₁₂ / z₁₁ ≤ th₂ is satisfied.

### <<Determination of Condition for Image Capture Timing (First Modification)>>

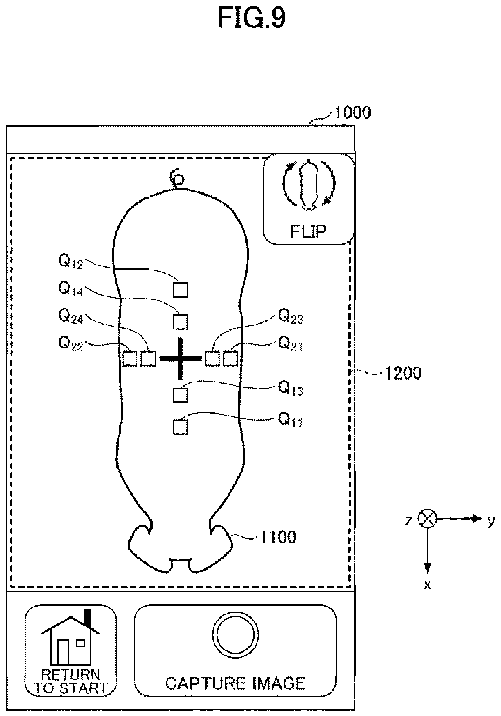

The first modification of the determination performed in step S101 described above will be described next. In the first modification, as illustrated in FIG. 9, whether the relative positional relationship between the image capturing device 10 and the pig P satisfies the condition for the image capture timing is determined by using the respective depth values z₁₁, z₁₂, z₁₃, z₁₄, z₂₁, z₂₂, z₂₃, and z₂₄ at eight points Q₁₁, Q₁₂, Q₁₃, Q₁₄, Q₂₁, Q₂₂, Q₂₃, and Q₂₄ that are set within the image capture range 1200 of the image capture screen 1000.

Q₁₁ and Q₁₃ are points on the x-axis and are set in the vicinity of the boundary between the shoulder and the back of the pig in the shape depicted by the image capture guide 1100. Further, Q₁₂ and Q₁₄ are points on the x-axis and are set in the vicinity of the boundary between the back and the rump of the pig in the shape depicted by the image capture guide 1100. Q₂₁ and Q₂₃ are points on the positive range of the y-axis and are set on the back of the pig in the shape depicted by the image capture guide 1100. Q₂₂ and Q₂₄ are points on the negative range of the y-axis and are set on the back of the pig in the shape depicted by the image capture guide 1100.

At this time, let th₁ to th₄ be preset thresholds. When th₁ ≤ z₁₂ / z₁₁ ≤ th₂, th₃ ≤ z₂₂ / z₂₁ ≤ th₄, th₁ ≤ z₁₄ / z₁₃ ≤ th₂, and th₃ ≤ z₂₄ / z₂₃ ≤ th₄ are satisfied, it is determined that the relative positional relationship between the image capturing device 10 and the pig P satisfies the condition for the image capture timing. Conversely, when at least one of th₁ ≤ z₁₂ / z₁₁ ≤ th₂, th₃ ≤ z₂₂ / z₂₁ ≤ th₄, th₁ ≤ z₁₄ / z₁₃ ≤ th₂, and th₃ ≤ z₂₄ / z₂₃ ≤ th₄ is not satisfied, it is determined that the relative positional relationship between the image capturing device 10 and the pig P does not satisfy the condition for the image capture timing.

Note that in a manner similar to that described above, Q₂₁, Q₂₂, Q₂₃, and Q₂₄ may not always be set. Furthermore, although eight points are set within the image capture range 1200 in the first modification, it should be noted that this is merely an example, and a greater number of points (nine or more points) may be set.

### <<Determination of Condition for Image Capture Timing (Second Modification)>>

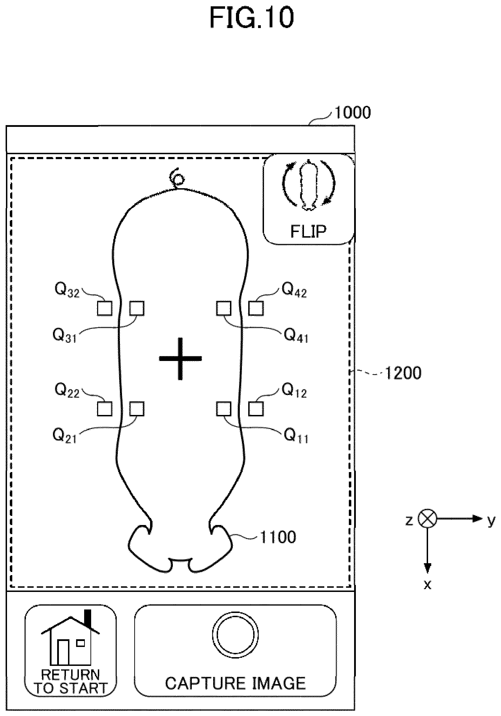

The second modification of the determination performed in step S101 described above will be described next. In the second modification, as illustrated in FIG. 10, whether the relative positional relationship between the image capturing device 10 and the pig P satisfies the condition for the image capture timing is determined by using the depth values of sets of two points, (Q₁₁, Q₁₂), (Q₂₁, Q₂₂), (Q₃₁, Q₃₂), and (Q₄₁, Q₄₂), which are set inside and outside of the image capture guide 1100. Let z₁₁, z₁₂, z₂₁, z₂₂, z₃₁, z₃₂, z₄₁, and z₄₂ be the depth values at Q₁₁, Q₁₂, Q₂₁, Q₂₂, Q₃₁, Q₃₂, Q₄₁, and Q₄₂, respectively.

Q₁₁ and Q₁₂ are points in the vicinity of the boundary of the left shoulder and the back of the pig in the shape depicted by the image capture guide 1100. Q₁₁ and Q₁₂ are set inside and outside, respectively, of the image capture guide 1100. Q₂₁ and Q₂₂ are points in the vicinity of the boundary of the right shoulder and the back of the pig in the shape depicted by the image capture guide 1100. Q₂₁ and Q₂₂ are set inside and outside, respectively, of the image capture guide 1100. In a similar manner, Q₃₁ and Q₃₂ are points in the vicinity of the boundary between the back and the right rump of the pig in the shape depicted by the image capture guide 1100. Q₃₁ and Q₃₂ are set inside and outside, respectively, of the image capture guide 1100. Q₄₁ and Q₄₂ are points in the vicinity of the boundary between the back and the left rump of the pig in the shape depicted by the image capture guide 1100. Q₄₁ and Q₄₂ are set inside and outside, respectively, of the image capture guide 1100.

At this time, let th be a preset threshold. When z₁₂ - z₁₁ ≥ th, z₂₂ - z₂₁ ≥ th, z₃₂ - z₃₁ ≥ th, and z₄₂ - z₄₁ ≥ th are satisfied, it is determined that the relative positional relationship between the image capturing device 10 and the pig P satisfies the condition for the image capture timing. Conversely, when at least one of z₁₂ - z₁₁ ≥ th, z₂₂ - z₂₁ ≥ th, z₃₂ - z₃₁ ≥ th, and z₄₂ - z₄₁ ≥ th is not satisfied, it is determined that the relative positional relationship between the image capturing device 10 and the pig P does not satisfy the condition for the image capture timing. This is because the contour of the pig P can be considered to be matching the outline of the image capture guide 1100 when z₁₂ - z₁₁ ≥ th, z₂₂ - z₂₁ ≥ th, z₃₂ - z₃₁ ≥ th, and z₄₂ - z₄₁ ≥ th are satisfied. While th can be set to an appropriate value that is slightly lower than the height of the pig, th may be set to a value that represents a measure of approximately 30 cm to 50 cm in accordance with, for example, the breed of the pig.

Note that four sets of two points, that is, (Q₁₁, Q₁₂), (Q₂₁, Q₂₂), (Q₃₁, Q₃₂), and (Q₄₁, Q₄₂) were set inside and outside of the image capture guide 1100 in the second modification. However, this is merely an example, and it is possible to set a greater number of sets (five or more sets) of two points.

### [Second Embodiment]

The second embodiment will be described next. In step S103 of FIG. 5, it was described that the process is not limited to notifying the photographer M of the arrival of the image capture timing, and that an image may be captured automatically by the image capturing unit 103. Hence, this embodiment will describe an embodiment that is more preferable when such automatic image capture is to be performed. Note that in this embodiment, instead of the notification of the image capture timing, an image is automatically captured when the relative positional relationship between the image capturing device 10 and the pig P satisfies predetermined conditions (these conditions will be referred to as "conditions for automatic image capture" hereinafter).

### <Functional Configuration>

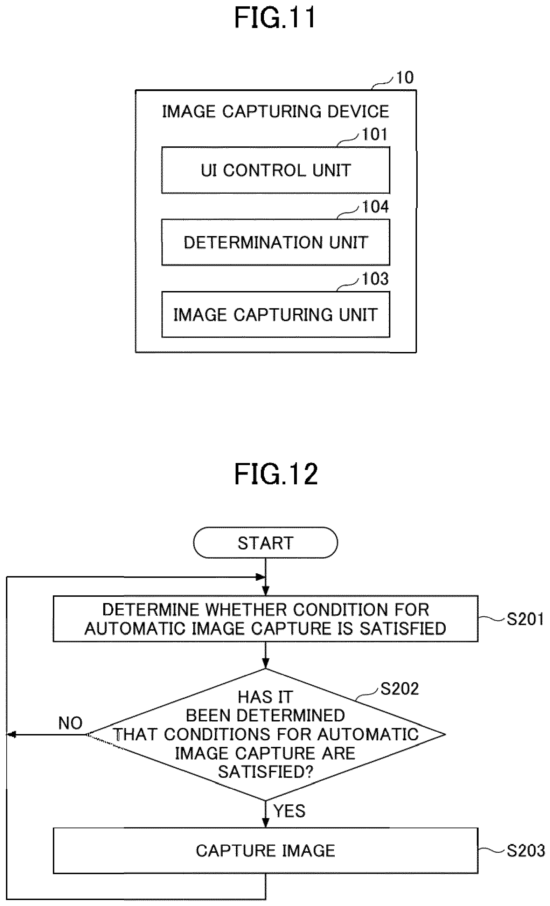

The functional configuration of the image capturing device 10 according to the embodiment will be described first with reference to FIG. 11. FIG. 11 is a block diagram illustrating an example of the functional configuration of the image capturing device 10 according to the second embodiment.

As illustrated in FIG. 11, the image capturing device 10 according to the embodiment includes the UI control unit 101, a determination unit 104, and the image capturing unit 103. Each of these units is implemented by causing a processor such as a central processing unit (CPU) to execute one or more programs installed in the image capturing device 10.

The UI control unit 101 displays the image capture screen 1000 on the display of the image capturing device 10. While the image capture screen 1000 is displayed, the determination unit 104 determines, at each predetermined period (for example, at each period of depth measurement), whether the relative positional relationship between the image capturing device 10 and the pig P satisfies the conditions for automatic image capture. When it is determined that the conditions for automatic image capture are satisfied, the image capturing unit 103 generates a set of 3D point cloud data {(x, y, z)} expressing the depth z at each position (x, y) within the image capture range 1200. Note that the set of 3D point cloud data generated by the image capturing unit 103 is transmitted to a weight estimation device 20.

### <Processing for Automatic Image Capture>

Processing for dynamically determining whether the relative positional relationship between the image capturing device 10 and the pig P satisfies the conditions for automatic image capture, and automatically capturing an image in accordance with the determination result will be described with reference to FIG. 12 hereinafter, based on the assumption that the image capture screen 1000 has been displayed on the display of the image capturing device 10 by the UI control unit 101. FIG. 12 is a flowchart illustrating an example of the processing for automatic image capture. Note that preprocessing such as exposure adjustment may be performed by the image capturing unit 103 before the execution of the processing for automatic image capture is started.

The determination unit 104 determines whether the relative positional relationship between the image capturing device 10 and the pig P satisfies the conditions for automatic image capture (step S201). Note that the details of this determination will be described later.

When it is determined that the relative positional relationship between the image capturing device 10 and the pig P satisfies the conditions for automatic image capture (YES in step S202), the image capturing unit 103 captures an image in the image capture range 1200 (step S203). As a result, the 3D point cloud data {(x, y, z)} representing the depth z at each position (x, y) within the image capture range 1200 is generated.

Conversely, when it is determined that the relative positional relationship between the image capturing device 10 and the pig P does not satisfy the conditions for automatic image capture (NO in step S202), the determination unit 104 returns the process to step S201 described above.

### <<Determination of Conditions for Automatic Image Capture>>

The details of the determination performed in step S201 described above will be described. In this embodiment, the following conditions 1 to 3 will be determined sequentially, and the conditions for automatic image capture are determined to be satisfied when all of the conditions are satisfied.
Condition 1: Detection of the contour of the rump (the tailhead portion) of the pig P
Condition 2: Detection of the contour of the side surfaces of the pig P
Condition 3: Tilt of the image capturing device 10 is small with respect to the pig P

The above-described conditions 1 to 3 and examples of display performed when these conditions are satisfied will be described hereinafter.

### • Condition 1

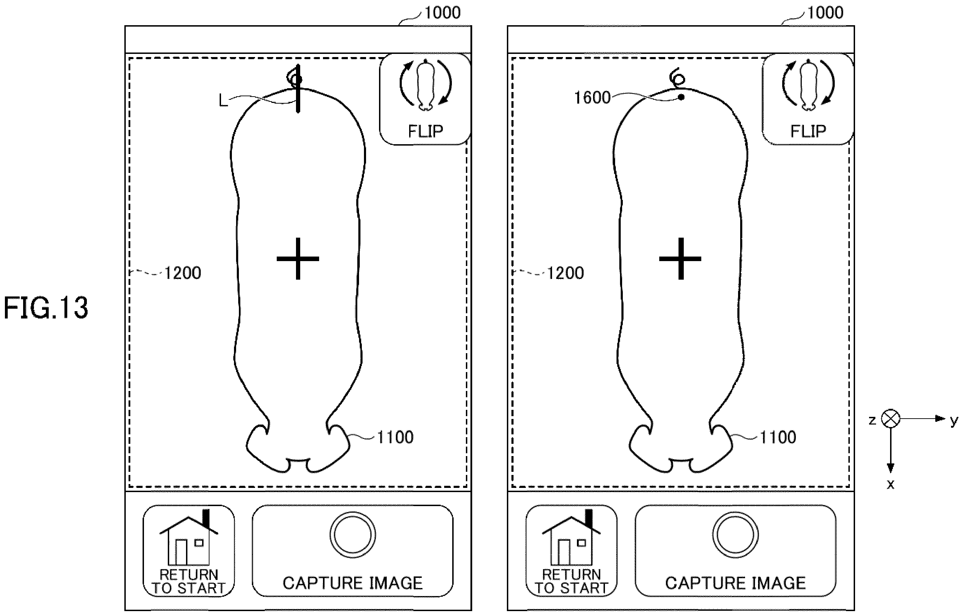

In this embodiment, as illustrated in the left view in FIG. 13, the contour of the rump (the tailhead portion) of the pig P is detected by using the respective depth values at the end points of a line L set within the image capture range 1200 of the image capture screen 1000.

The line L is on the x-axis and is set across the boundary of the rump portion in the shape depicted by the image capture guide 1100. Although it is preferable for the midpoint of the line L to be set on the image capture guide 1100, the midpoint may not always be set on the image capture guide 1100. Furthermore, although the length of the line L can be set appropriately, it is preferable for the length of the line L to be, for example, approximately 1/10 to 1/8 of the length of the body of the pig depicted by the image capture guide 1100. This is because detection errors tend to occur more easily when the length of the line L is too long, whereas detection omissions tend to occur more easily when the length of the line L is too short.

Of the end points of the line L, let z₁ be the value of depth at an end point with a large x-coordinate value (that is, an end point that is inside of the image capture guide 1100), and z₂ be the value of the depth at an end point with a small x-coordinate value (that is, an end point that is outside of the image capture guide 1100). At this time, let th be a preset threshold. When z₂ - z₁ ≥ th is satisfied, it is determined that the contour of the rump (the tailhead portion) of the pig P has been detected. In this case, this threshold th may be the same as the threshold th described in FIG. 10.

Note that although the line L is set in the left view in FIG. 13, the embodiment is not limited to this. For example, a set of points corresponding to the end points of the line L may be set, and the contour of the rump of the pig P may be detected by using the depth values of these points.

Furthermore, although only one line L was set in the left view in FIG. 13, the contour of the rump of the pig P may be detected by setting a plurality of lines and using the depth values at the end points of each of these lines. In such a case, it may be determined that the contour of the rump of the pig P has been detected, for example, when the contour has been detected in a predetermined number or more of the lines (that is, when the depth difference between the end point on the outside and the end point on the inside of the image capture guide 1100 is more than or equal to the threshold in a predetermined proportion or more of the lines).

When the contour of the rump of the pig P has been detected, the UI control unit 101 displays, as illustrated in the right view in FIG. 13, a point 1600 at the position corresponding to the rump of the pig P within the image capture range 1200. This point 1600 lets the photographer M know that the contour of the rump (the tailhead portion) of the pig P has been detected.

### • Condition 2

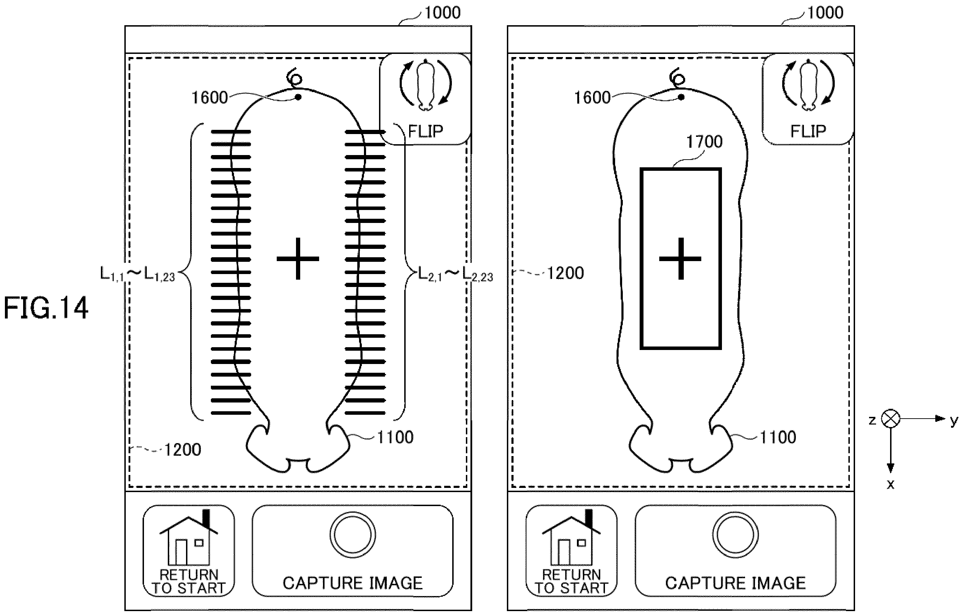

In this embodiment, as illustrated in the left view in FIG. 14, the contour of the side surfaces of the pig P is detected by using the depth values at the end points of multiple lines L_{1, 1} to L_{1, 23} and L_{2, 1} to L_{2, 23} set within the image capture range 1200 of the image capture screen 1000.

The lines L_{1, 1} to L_{1, 23} are parallel to the y-axis, and at least some of the lines are set across the boundary of the right-side surface portion of the shape depicted by the image capture guide 1100. In a similar manner, lines L_{2, 1} to L_{2, 23} are parallel to the y-axis, and at least some of the lines are set across the boundary of the left-side surface portion of the shape depicted by the image capture guide 1100. Although 23 lines have been set for each of the left-side surface and the right-side surface in the left view in FIG. 14, this is merely an example, and any number of lines can be set. Furthermore, while the length of each line may be set appropriately, the length of each line may preferably set to, for example, approximately 1/5 to 1/3 of the width of the body of the pig depicted by the image capture guide 1100. This is because detection errors tend to occur more easily when the length of each line is too long, whereas detection omissions tend to occur more easily when the length of each line is too short.

Of the end points of the line L_{1, k} (k = 1, ..., 23), let z_{1, k}⁽¹⁾ be the depth value at an end point that has a large y-coordinate value (that is, an end point that is inside of the image capture guide 1100), and let z_{2, k}⁽¹⁾ be the depth value at an end point that has a small y-coordinate value (that is, an end point that is outside of the image capture guide 1100). At this time, let th be a preset threshold. When the proportion of k that satisfies z_{2, k}⁽¹⁾ - z_{1, k}⁽¹⁾ ≥ th with respect to the total number of k is a predetermined proportion or more, it is determined that the contour of the right-side surface of the pig P has been detected.

In a similar manner, of the end points of the line L_{2, k} (k = 1, ..., 23), let z_{1, k}⁽²⁾ be the depth value at an end point that has a small y-coordinate value (that is, an end point that is inside of the image capture guide 1100), and let z_{2, k}⁽²⁾ be the depth value at an end point that has a large y-coordinate value (that is, an end point that is outside of the image capture guide 1100). At this time, let th be a preset threshold. When the proportion of k that satisfies z_{2, k}⁽²⁾ - z₁, ₖ⁽²⁾ ≥ th with respect to the total number of k is a predetermined proportion or more, it is determined that the contour of the left-side surface of the pig P has been detected.

The threshold th described above here may be the same as the threshold th described in FIG. 10. In addition, although the predetermined proportion described above may be set to any value, it is preferable to set the value of the predetermined proportion to at least 0.5 or more (that is, 50% or more). More preferably, the value of the predetermined proportion is set to approximately 0.6 to 0.8.

Subsequently, when the contour of the left-side surface and the contour of the right-side surface of the pig P are detected, the UI control unit 101 determines that the contours of the side surfaces of the pig P have been detected, and displays a frame 1700 in the image capture range 1200, as illustrated in the right view in FIG. 14. The frame 1700 allows the photographer M to know that the contours of the side surfaces of the pig P have been detected.

Note that some of the lines do not cross the boundary of the image capture guide 1100 in the left view in FIG. 14. This takes into account that the pig P may not always fit within the image capture guide 1100. However, the lines may be arranged so that all of the lines cross the image capture guide 1100.

### • Condition 3

Condition 3 corresponds to the image capture timing described in FIG. 6. Hence, when the condition for the image capture timing described in FIG. 6 is satisfied, it is determined that the tilt of the image capturing device 10 with respect to the pig P is small. This is because appropriately setting the thresholds th₁ to th₄, which are described in FIG. 6, allows the tilt of the image capturing device 10 with respect to the pig P to be a predetermined tilt or less.

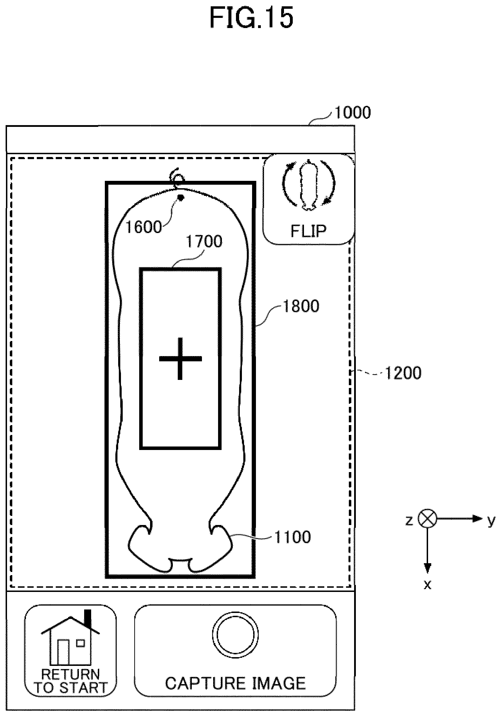

Subsequently, when it is determined that the tilt of the image capturing device 10 with respect to the pig P is small, the UI control unit 101 displays a frame 1800 within the image capture range 1200 as illustrated in FIG. 15. The frame 1800 allows the photographer M to know that the tilt of the image capturing device 10 with respect to the pig P is small and that an image will be automatically captured soon.

### <Obstacle Display and Contour>

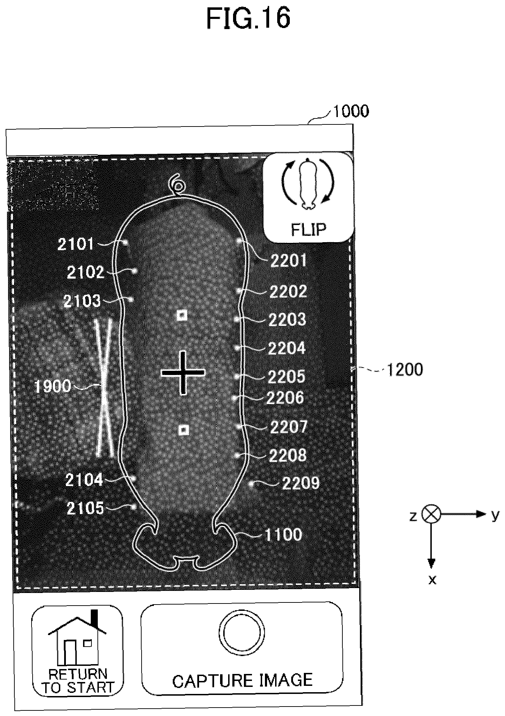

While the contour of the pig P is detected based on conditions 1 and 2 described above, the contour may not be detected in some cases due to, for example, an obstacle (including also a wall or the like) being in contact with the pig P. Hence, in such a case, predetermined display may be performed at the location where the contour cannot be detected, and the photographer M may be notified about the presence of the obstacle. For example, as illustrated in FIG. 16, an X mark 1900 may be displayed at the location where the contour cannot be detected, and the photographer M may be notified about the presence of the obstacle.

Alternatively, predetermined display may also be performed at locations where the contour is detected, and the photographer M may be notified about the detection of the contour. For example, as illustrated in FIG. 16, points 2101 to 2105 and points 2201 to 2209 may be displayed at locations where the contour is detected, and the photographer M may be notified about the detection of the contour.

As a result, the photographer M can know both the location where the contour is not detected due to the presence of an obstacle and the locations where the contour is detected without a problem.

### <Summary>

As described above, when capturing an image of the pig P for the purpose of acquiring the 3D point cloud data to be used for weight estimation of the pig P, the image capturing device 10 according to the first embodiment dynamically determines whether the relative positional relationship between the image capturing device 10 and the pig P satisfies a predetermined condition, and notifies the photographer M about the optimal image capture timing (or automatically captures an image) when the predetermined condition is satisfied. As a result, the image capturing device 10 according to the first embodiment can acquire 3D point cloud data that has little variation from those acquired by different photographers. Hence, when the weight estimation device 20 estimates the weight of the pig P, variation in the estimation result can be reduced. Therefore, weight estimation can be implemented with high reproducibility.

Furthermore, when capturing an image of the pig P for the purpose of acquiring the 3D point cloud data to be used for weight estimation of the pig P, the image capturing device 10 according to the second embodiment dynamically determines whether the relative positional relationship between the image capturing device 10 and the pig P satisfies predetermined conditions, and automatically captures an image when the predetermined conditions are satisfied. As a result, the image capturing device 10 according to the second embodiment can acquire 3D point cloud data, which has little variation from those acquired by different photographers, more easily than that of the first embodiment. Hence, in a similar manner to the first embodiment, variation in the estimation result can be reduced when the weight estimation device 20 estimates the weight of the pig P. Therefore, weight estimation can be implemented with high reproducibility.

The present invention is not limited to the embodiment disclosed in detail above. Various changes, modifications, or combinations with known techniques can be made without departing from the scope defined in the appended claims.

The present international application is based on and claims priority to Japanese Patent Application No. 2020-055979 filed on March 26, 2020, with the Japanese Patent Office, the entire contents of which are hereby incorporated by reference.

### REFERENCE SIGNS LIST

1 weight estimation system
10 image capturing device
20 weight estimation device
101 UI control unit
102 notification unit
103 image capturing unit
104 determination unit

## Claims

1. An image capturing device for generating 3D point cloud data to be used in weight estimation of an image-capture object, the image capturing device comprising:
a determination unit configured to dynamically determine whether a relative positional relationship between the image-capture object and the image capturing device satisfies a predetermined condition; and
a control unit configured to capture an image of the image-capture object or to perform a notification prompting a user to capture the image of the image-capture object when the relative positional relationship satisfies the predetermined condition.

2. The image capturing device according to claim 1, wherein the image-capture object is a pig, and
wherein when the image capturing device captures an image of the pig from above, the determination unit is configured to determine that the predetermined condition is satisfied when a ratio of a first distance to a first position set in a vicinity of a boundary between a shoulder and a back of the pig to a second distance to a second position set in a vicinity of a boundary between the back and a rump of the pig is within at least a predetermined first range.

3. The image capturing device according to claim 2, wherein the first position and the second position are set on a center line that equally divides a left side and a right side of the pig.

4. The image capturing device according to claim 3, wherein the determination unit is configured to determine that the predetermined condition is satisfied when
a third position and a fourth position that are symmetrical to the center line are further present, and
a ratio of a third distance to the third position to a fourth distance to the fourth position set on the back of the pig is within a predetermined second range.

5. The image capturing device according to claim 1, wherein the image-capture object is a pig, and
wherein when the image capturing device captures an image of the pig from above, the determination unit determines that the predetermined condition is satisfied when a difference between a fifth distance to a fifth position set inside of a boundary of the pig and a sixth distance to a sixth position set outside of the boundary of the pig is at least a predetermined threshold or more.

6. The image capturing device according to claim 1, wherein the image-capture object is a pig,
wherein the predetermined condition includes
a first condition that expresses that a boundary of a tailhead portion of the pig is detected,
a second condition that expresses that a boundary of a side surface of the pig is detected, and
a third condition that expresses that a tilt of the image capturing device with respect to the pig is a predetermined tilt or less, and
wherein the determination unit is configured
to sequentially determine whether the first condition is satisfied, whether the second condition is satisfied, and whether the third condition is satisfied, and
to capture the image of the image-capture object when it is determined that the first condition, the second condition, and the third condition are satisfied.

7. The image capturing device according to claim 6, further comprising a display unit configured to display, at a location where the boundary of the side surface is not detected, a first display component configured to indicate that the boundary of the side surface of the pig has not been detected.

8. The image capturing device according to claim 7, wherein the display unit is configured to display, at a location where the boundary of the side surface of the pig is detected, a second display component configured to express that the boundary of the side surface of the pig has been detected.

9. An image capturing method executed by an image capturing device configured to generate 3D point cloud data to be used in weight estimation of an image-capture object, the image capturing method comprising:
executing a determination process of dynamically determining whether a relative positional relationship between the image-capture object and the image capturing device satisfies a predetermined condition; and
executing a control process of capturing an image of the image-capture object or performing a notification prompting a user to capture the image of the image-capture object when the relative positional relationship satisfies the predetermined condition.

10. A program for causing a computer to function as each unit of the image capturing device according to any one of claims 1 to 8.
